# EUROPEAN PATENT APPLICATION

(11) **EP 4 818 915 A1**
(43) Date of publication of application: **07.10.2026**
(21) Application number: 24896259.9
(22) Date of filing: 12.11.2024
(51) Int. Cl.: G06F 13/20, G06F 13/38, G06F 13/42

(54) **DIGITAL CIRCUIT FOR CONTROLLING SAME REGISTER WITH DIFFERENT MIPI BUSES, AND ELECTRONIC DEVICE**

(30) Priority: 28.11.2023 CN 202311604745
(71) Applicant: Vanchip (Tianjin) Technology Co. Ltd, Tianjin 300457 (CN)
(72) Inventor: YAN, Yuming, Tianjin 300457 (CN); ZHANG, Qihua, Tianjin 300457 (CN); ZHANG, Yongsheng, Tianjin 300457 (CN)
(74) Representative: Patentship Patentanwaltsgesellschaft mbH
(86) International application number: PCT/CN2024/131520
(87) International publication number: WO 2025/113168

(57) **Abstract**

The present application discloses a digital circuit for controlling the same register by different MIPI buses and an electronic device. The digital circuit includes a first MIPI module, a second MIPI module and a shared register module. An input of the first MIPI module is connected to a first MIPI bus, and an input of the second MIPI module is connected to a second MIPI bus. Outputs of the first and second MIPI modules are connected to the shared register module via respective data buses. Serial clock signal lines in the first and second MIPI buses are connected to the shared register module. When different MIPI buses issue a write or trigger/reset operation, the first and/or the second MIPI modules operate in coordination with the shared register module to enable control of the same register by the different MIPI buses.

## Description

### TECHNICAL FIELD

The present application relates to a digital circuit for controlling the same register by different MIPI buses and an electronic device incorporating the digital circuit and pertains to the field of digital circuits.

### BACKGROUND

Integrated circuit technology is continuously advancing, providing increasingly highly integrated radio frequency (RF) front-end chips. LNA power amplifier modules with integrated duplexers (L-PAMiD) are extremely highly integrated RF front-end chips incorporating a power amplifier (PA), a low noise amplifier (LNA), filters, antenna switches (ASW), crossbar switches (XSW), duplexers/multiplexers and other components. L-PAMiD modules are advantageous in a reduced RF front-end footprint and lower power consumption.

Typically, there are two or more mobile industry processor interface (MIPI) buses, along with many integrated operational amplifiers and control switches, in a highly integrated RF front-end. For flexibility in configuration and ease of use, some control switches are desired to accept operational commands from different MIPI buses. This requires the internal registers of these switches to accept MIPI commands from different MIPI buses. As specified in the MIPI protocol, the internal registers of those control switches are user-defined registers (UDRs) that must respond not only to write commands, but also to trigger, reset, mask write and other MIPI commands.

Conventionally, MIPI UDRs are implemented as registers in digital circuits. An output Q of such a register transitions to a level at its input D in response to a clock edge, or is reset by a valid reset signal. This design works well when the register is controlled by a single bus. However, if the register is controlled by different buses, a conflict arises where different clock signals drive the same register. In order to overcome this, there is a need for a digital circuit for controlling the same register by different MIPI buses.

Chinese Pat. App. No. 201810703855.9 discloses a serial communication device and method. The serial communication device includes an RF front-end module and RF devices. First and second input interfaces of the RF front-end module are connected to respective output interfaces of a master module. When a first output interface of the RF front-end module is connected to a first input interface of at least one of the RF devices via a first signal bus, a second output interface of the RF front-end module is connected to a second input interface of the at least one RF device via a second signal bus. This serial communication device enables easy, fast one-way communication between and within chips in the RF front-end module.

### SUMMARY OF THE APPLICATION

In principle, it is an object of the present application to provide a digital circuit for controlling the same register by different MIPI buses.

It is another object of the present application to provide an electronic device incorporating the digital circuit.

To this end, the present application includes the following aspects.

According to a first aspect of embodiments of the present application, there is provided a digital circuit for controlling the same register by different MIPI buses, which comprises at least a first MIPI module, a second MIPI module and a shared register module.

An input of the first MIPI module is connected to a first MIPI bus, and an input of the second MIPI module is connected to a second MIPI bus. Outputs of the first and second MIPI modules are connected to the shared register module via respective data buses. Serial clock signal lines in the first and second MIPI buses are connected to the shared register module, respectively.

The first and second MIPI modules are both MIPI interface modules, and the shared register module is a user-defined register (UDR).

Optionally, the first or second MIPI module, when receiving an MIPI command, generates a corresponding flag bit signal lasting for a single clock cycle and outputs the flag bit signal to the shared register module, wherein the shared register module is based on the flag bit signal to generate a single pulse clock signal for causing a transition of register data at a rising edge of the single pulse clock signal.

Optionally, the shared register module may generate, during a write operation performed by the first or second MIPI bus, an internal flag bit signal which records the bus that performs a last write operation, so that the shared register module responds only to a trigger or reset operation issued by the bus.

Optionally, the first MIPI module may be constructed of a main logic circuit and a flag register bank, wherein:
an input of the main logic circuit is connected to the first MIPI bus, and an internal data line output by the main logic circuit is connected to an input of the flag register bank; and
a data buffer bus and a register address bus output by the main logic circuit, and write, trigger and reset flag data lines output by the flag register bank collectively constitute an output data line that is connected to the shared register module.

Optionally, the shared register module may be constructed of a first logic gate, a second logic gate, a third logic gate, an OR logic gate and a register bank, wherein the first, second and third logic gates are all combinational logic circuits and constitute a control logic circuit with the OR logic gate, wherein the register bank is constructed of a shared register and a register buffer, and wherein the shared register consists of a plurality of identically structured registers.

Optionally, each of the first and second logic gates may be configured to provide the register bank with a clock signal, wherein inputs of the first logic gate are connected to a flag data bus and a register address bus in data lines output by the first MIPI module and to a serial clock signal line in the first MIPI bus; inputs of the second logic gate are connected to a flag data bus and a register address bus in data lines output by the second MIPI module and to a serial clock signal line in the second MIPI bus; outputs of the first and second logic gates are connected to the OR logic gate; and an output of the OR logic gate is connected to a clock terminal of the register bank.

Optionally, the third logic gate may be configured to provide the register bank with an input signal, wherein inputs of the third logic gate are connected to data buffer buses and flag data buses output by the first and second MIPI modules and to a current signal bus of the register buffer in the register bank, and an output of the third logic gate is connected to an input of the register bank.

Optionally, an internal flag bit signal line of the shared register module may be connected to inputs of the first, second and third logic gates.

Optionally, in a triggered mode, when one of the MIPI buses performs a write operation on the shared register module, written data first enter the register buffer, and wherein when the shared register module is triggered, the data in the register buffer is called and written into the shared register.

According to a second aspect of embodiments of the present application, there is provided an electronic device comprising the digital circuit for controlling the same register by different MIPI buses as defined above.

In comparison to the prior art, the present application proposes a digital circuit for controlling the same register by different MIPI buses, which generates a flag bit signal and a single pulse clock signal for a corresponding operation when different buses perform a write, reset, trigger or other operation, and controls and manages the operation through the logical operations. In this way, the requirement of control of the same register by different MIPI buses is solved, without any compromise on the functionality of MIPI sub-chips. Moreover, the likelihood of metastability arising from competition of different buses for control of the same register can be minimized. Therefore, the proposed digital circuit for controlling the same register by different MIPI buses offers a wide range of benefits including a sensible structural design, low design cost and excellent circuit performance.

### BRIEF DESCRIPTION OF THE DRAWINGS

Fig. 1 shows a block diagram illustrating the structure of a digital circuit for controlling the same register by different MIPI buses according to the present application.
Fig. 2 shows a block diagram illustrating the structure of a digital circuit for controlling the same register by different MIPI buses, according to an embodiment of the present application.
Fig. 3 shows a schematic circuit diagram of a first MIPI module, according to an embodiment of the present application.
Fig. 4 shows a schematic circuit diagram of a shared register module, according to an embodiment of the present application.
Fig. 5 shows a timing diagram of a write operation performed by a digital circuit, according to an embodiment of the present application.
Fig. 6 shows a timing diagram of a trigger/reset operation performed by a digital circuit, according to an embodiment of the present application.
Fig. 7 shows a schematic diagram of an electronic device incorporating a digital circuit for controlling the same register by different MIPI buses according to the present application.

### DETAILED DESCRIPTION

The present application is described in detail below with reference to the accompanying drawings, which illustrate specific embodiments thereof.

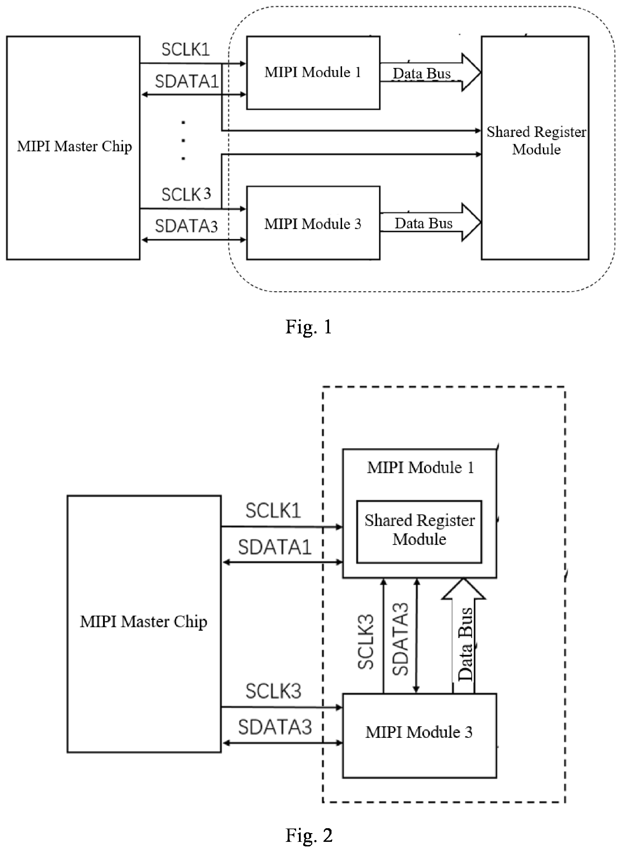

As shown in Fig. 1, the present application proposes a digital circuit for controlling the same register by different mobile industry processor interface (MIPI) buses, which includes at least a first MIPI module 1, a second MIPI module 3 and a shared register module. An input of the first MIPI module 1 is connected to a first MIPI bus, and an input of the second MIPI module 3 is connected to a second MIPI bus. Outputs of the first and second MIPI modules 1, 3 are connected to the shared register module via respective data buses. In addition, a serial clock signal line SCLK1 in the first MIPI bus and a serial clock signal line SCLK3 in the second MIPI bus are both connected to the shared register module.

The first and second MIPI modules 1, 3 are connected to control paths of different MIPI buses. Both are MIPI interface modules with full functionality prescribed for sub-chips in the MIPI protocol, and the data buses at their outputs includes the write, trigger, reset, and masked write flag bits of the MIPI module, as well as other data.

The shared register module is a user-defined register (UDR) capable of responding to write, trigger, reset, mask write and other MIPI commands. As shown in Fig. 2, according to an alternative embodiment of the present application, the shared register module may be arranged within the first or second MIPI module.

Upon receiving an MIPI command, the first or second MIPI module generates a corresponding flag bit signal lasting for a single clock cycle and outputs it to the shared register module. Based on this flag bit signal, the shared register module generates a single pulse clock signal for causing a transition in register data at a rising edge of the single pulse clock signal.

The shared register module, when a write operation performed thereon by the first or second MIPI bus, generates an internal flag bit signal recording the bus that performs the last write operation and then responds only to a trigger or reset operation issued by the bus.

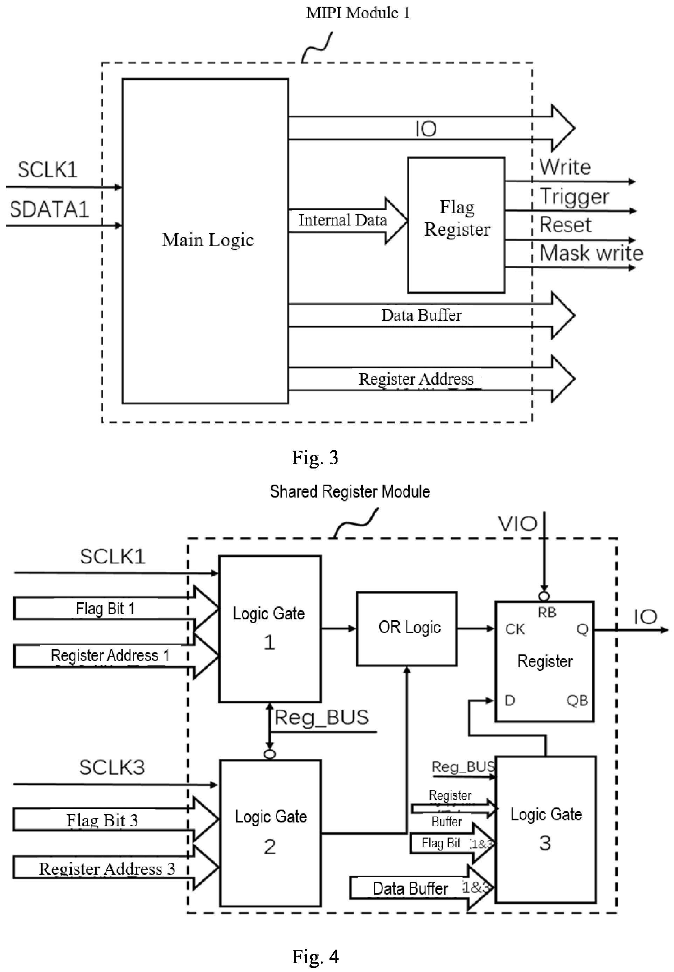

As shown in Fig. 3, according to an embodiment of the present application, the first and second MIPI modules are of the same structure and operate in the same way. Therefore, only the first MIPI module is described below, as an illustrative example. The first MIPI module is constructed of a main logic circuit and a flag register bank. An input of the main logic circuit is connected to the first MIPI bus, and an internal data line output by the main logic circuit is connected to an input of the flag register bank. A data buffer bus and a register address bus output by the main logic circuit, along with write, trigger, reset and mask write flag data lines output by the flag register bank, together constitute the output data line which is connected to the shared register module. There is also an input/output (IO) bus output by the main logic circuit, which is configured to connect with an associated downstream functional module. Depending on the different application scenarios, the mask write flag data line output by the flag register bank may be omitted.

The main logic circuit is responsible for transmitting and receiving MIPI packets and performing the functions specified in the MIPI protocol for sub-chips. For any non-shared register, the main logic circuit sets it to an intended value and transmits it to the downstream module in the form of I/O.

The data buffer is an 8-bit buffer for buffering serial data signals SDATA of MIPI packets for the main logic circuit. It is used to directly set the shared register to an intended value or assist in validating a flag bit. The register address is the address of a target register specified in the current MIPI command.

The flag register bank is responsible for analyzing internal data at a falling edge of a serial clock signal SCLK of the first MIPI bus and outputting a write, trigger, reset or other flag bit signal that lasts for only a single clock cycle. The flag register bank contains as many registers as there are types of flag bit signals. Typically, there are three or four flag registers.

It should be noted that the write, trigger, reset and mask write flag data lines output by the flag register bank may be either independent general-purpose input/output (GPIO) lines, or encoded buses.

As shown in Fig. 4, according to an embodiment of the present application, the shared register module is constructed of a first logic gate 1, a second logic gate 2, a third logic gate 3, an OR logic gate and a register bank. The first logic gate 1, the second logic gate 2, the third logic gate 3 and the OR logic gate together constitute a control logic circuit. The first logic gate 1, the second logic gate 2 and the third logic gate 3 are all combinational logic circuits for performing distinct functions. The register bank is made up of a shared register and a register buffer, and the shared register consists of several identically structured registers. In order to perform a trigger operation on the register module, data in the shared register of the register bank is updated to data value in the register buffer. It should be noted that, for ease of illustration, a single register symbol is used to represent both the shared register and register buffer in Fig. 4.

The first and second logic gates 1, 2 are configured to provide the register bank with a clock signal. An input of the first logic gate 1 is connected to a flag data bus 1 and a register address bus 1 in the output data line of the first MIPI module and to the serial clock signal line SCLK1 in the first MIPI bus. An input of the second logic gate 2 is connected to a flag data bus 3 and a register address bus 3 in the output data line of the second MIPI module and to the serial clock signal line SCLK3 in the second MIPI bus. Outputs of the first and second logic gates 1, 2 are connected to the OR logic gate, and an output of the OR logic gate is connected to a clock terminal of the register bank.

The third logic gate 3 is configured to provide the register bank with input signals. An input of the third logic gate 3 is connected to the data buffer and flag data buses output by the first and second MIPI modules and to a current signal bus of the register buffer in the register bank. An output of the third logic gate 3 is connected to an input of the register bank. An output from the shared register in the register bank is transmitted to the downstream module in the form of I/O.

An internal flag bit signal line Reg_BUS of the shared register module is connected to the inputs of the first logic gate 1, the second logic gate 2 and the third logic gate 3. The internal flag bit signal line Reg_BUS is configured to record the bus that performs the last write operation on the shared register module. The shared register module responds only to a trigger/reset operation issued by the bus that performs the last write operation on the shared register module.

Each of the first and second logic gates 1, 2 is based on information carried by the flag data bus, the register address bus and the internal flag bit signal line Reg_BUS output by the respective MIPI module to sample the respective serial clock signal (SCLK1 or SCLK3). One clock signal is sampled from the tens of the serial clock signal of the MIPI command frame, the clock signal is used to trigger the shared register.

The third logic gate 3 is based on information carried by the data buffer buses, the flag data lines and the internal flag bit signal lines Reg_BUS output by the first and second MIPI modules to generate input data to the shared register.

It should be noted that although the shared register has been described and illustrated as having only one triggering register buffer, in alternative embodiments of the present application, the shared register may have two triggering register buffers, so that each MIPI bus has a corresponding register buffer.

It should be noted that, in alternative embodiments of the present application, the digital circuit for controlling the same register by different MIPI buses may include a plurality of first MIPI modules, a plurality of second MIPI modules and a plurality of shared register modules. In these embodiments, the plurality of first MIPI modules and the plurality of second MIPI modules are connected to the respective control paths in the respective MIPI buses. Moreover, outputs of the first and second MIPI modules are connected to the respective shared register modules via data buses, allowing the shared register modules to be controlled by the different MIPI buses.

Write and trigger/reset operations on the shared register module are described below to explain the working principles and mechanisms of the proposed digital circuit for controlling the same register by different MIPI buses.

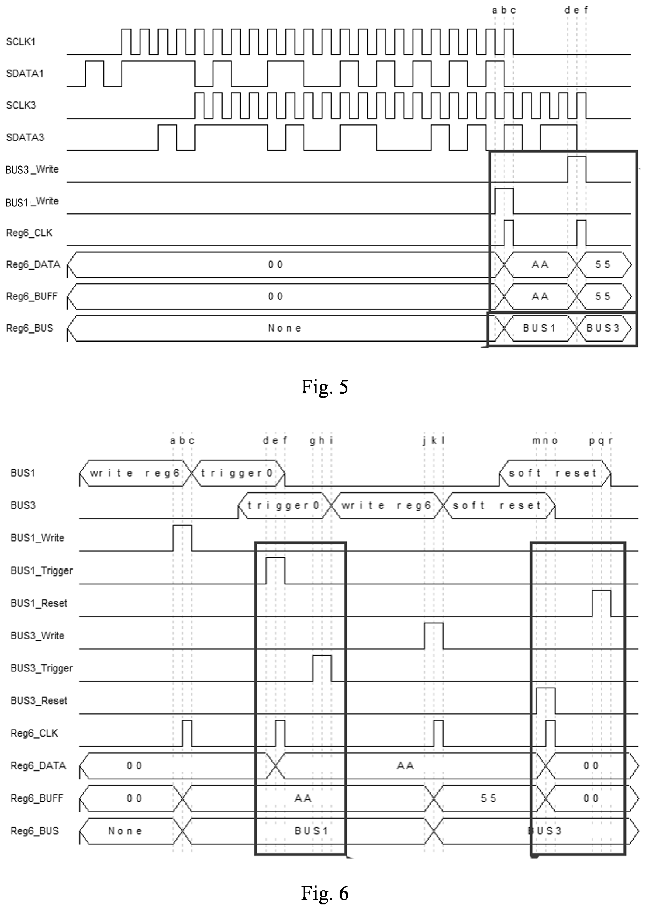

Fig. 5 shows timing of a write operation performed by the digital circuit for controlling the same register by different MIPI buses, in which the shared register Reg6 is operating in a non-triggered mode, as an example. Write commands from different MIPI buses may be received and decoded by the respective MIPI modules and then forwarded to the shared register module, causing changes in the value of the shared register Reg6. When the MIPI bus performs a write operation on the register Reg6, the write flag data line BUS_Write of the MIPI module of the bus outputs a pulse signal, based on which a single pulse clock signal Reg6_CLK is sampled from the serial clock signal SCLK of the specific MIPI bus. At the same time, the internal flag bit signal line Reg6_BUS in the shared register module records the bus that performs the last write operation. The shared register data Reg6_DATA and the register buffer data Reg6_BUFF transition at a rising edge of the single pulse clock signal Reg6_CLK.

For example, in Fig. 5, the first MIPI bus issues a write command at time *a*, the write flag BUS1_Write of the first MIPI bus outputs a pulse signal with a width from time *a* to time c. Based on this pulse signal, a single pulse clock signal Reg6_CLK with a width from time *b* to time c is sampled from the serial clock signal SCLK1 of the first MIPI bus. At this time, the internal flag bit signal line Reg6_BUS in the shared register module records that the first MIPI bus that performs the last write operation is BUS1. The shared register data Reg6_DATA and the register buffer Reg6_BUFF transition at a rising edge of the single pulse clock signal Reg6_CLK, i.e., at time b, and the value of the shared register Reg6 changes as well.

Fig. 6 shows timing of a trigger/reset operation performed by the digital circuit for controlling the same register by different MIPI buses. The shared register responds only to a trigger/reset operation issued by the bus that performs the last write operation. In the figure, the shared register Reg6 is used as an example to illustrate the timing coordination of this mechanism.

In a triggered mode, when bus MIPI1 or MIPI3 performs a write operation on the shared register Reg6, the written data will not enter the register data Reg6_DATA immediately, instead of directly entering a register buffer Reg6_BUFF. Only after Reg6 is triggered, it is called and written to the register data Reg6_DATA. After the bus MIPI1 or MIPI3 performs a write operation on the shared register Reg6, the register flag bit Reg6_BUS records the MIPI bus that performs the last write operation. Reg6 responds only to a trigger/reset operation issued by the MIPI bus that Reg6_BUS records.

For example, in Fig. 6, the first MIPI bus (labeled as BUS1) performs a write operation on the shared register Reg6 at time b. The data AA being written first enters the register buffer Reg6_BUFF. At the same time, the register flag bit Reg6_BUS records the bus BUS1 that performs the write operation.

During the performance of a write operation by the first or second MIPI bus, or of a trigger or reset operation by the bus recorded by the register flag bit Reg6_BUS, on the shared register Reg6, a flag bit signal is generated, which lasts for a single clock cycle, i.e., BUS1_Write, BUS1_Trigger or BUS1_Reset, or BUS3_Write, BUS3_Trigger or BUS3_Reset, shown in the figure. Based on this flag bit signal, the shared register module samples a single pulse clock signal Reg6_CLK from the respective serial clock signal SCLK. A register value of the register data Reg6_DATA and a register value of the register buffer Reg6_BUFF transition at a rising edge of the clock signal Reg6_CLK.

For example, in Fig. 6, at the rising edges of the clock signal Reg6_CLK at times b and e, the register buffer Reg6_BUFF and the register data Reg6_DATA transition successively.

The structure and working principles of the proposed digital circuit for controlling the same register by different MIPI buses have been discussed in detail above. Embodiments of the present application also provide an electronic device incorporating the proposed digital circuit for controlling the same register by different MIPI buses, as an important component of a radio frequency (RF) communication component, for communication control in an associated transmit (Tx) and/or receive (Rx) components. As used herein, the term "electronic device" refers to a computing device capable of operation in mobile environments and supporting various communication standards such as GSM, EDGE, CDMA, TD-SCDMA, WCDMA, TDD-LTE, FDD-LTE and NR. Examples of the electronic device may include mobile phones, laptop computers, tablet computers and on-board computers. The present application can also be suitably used in other applications requiring RF integrated circuits, such as communication base stations and connected intelligent vehicles.

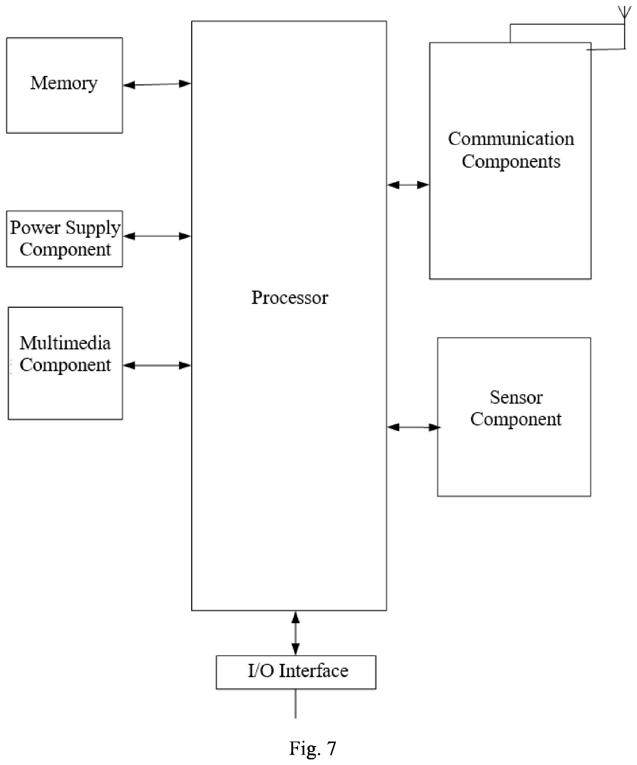

As shown in Fig. 7, the electronic device includes at least a processor, memory and communication components. If required, it may also include a sensor component, a power supply component, a multimedia component and I/O interfaces. The memory, the communication component, the sensor component, the power supply component, the multimedia component and the I/O interfaces are all connected to the processor. The memory may be static random-access memory (SRAM), electrically erasable programmable read-only memory (EEPROM), erasable programmable read-only memory (EPROM), programmable read-only memory (PROM), read-only memory (ROM), magnetic memory, flash memory or the like. The processor may be a central processing unit (CPU), a graphics processing unit (GPU), a field-programmable gate array (FPGA), an application-specific integrated circuit (ASIC), a digital signal processing (DSP) chip or the like. Other communication components, the sensor component, the power supply component and the multimedia component may be implemented as conventional ones, and further description thereof is omitted herein.

As discussed above, in comparison to the prior art, the present application proposes a digital circuit for controlling the same register by different MIPI buses, which generates a flag bit signal and a single pulse clock signal for a corresponding operation when different buses perform a write, reset, trigger or other operation, and controls and manages the operation through the logical operations. In this way, the requirement of control of the same register by different MIPI buses is solved, without any compromise on the functionality of MIPI sub-chips. Moreover, the likelihood of metastability arising from competition of different buses for control of the same register can be minimized. Therefore, the proposed digital circuit for controlling the same register by different MIPI buses offers a wide range of benefits including a sensible structural design, low design cost and excellent circuit performance.

It should be noted that, as used herein, the terms "first", "second" and the like are intended only for illustration and are not to be construed as denoting or implying relative importance, or as implicitly indicating the number of the referenced items. Accordingly, defining an item with "first" or "second" is an explicit or implicit indication of the presence of at least one such item. As used herein, the term "plurality" means "two or more", unless otherwise clearly defined.

Although digital circuits for controlling the same register by different MIPI buses and electronic devices proposed herein have been described above in detail, various modifications are apparent without departing from the true scope of the present application. Accordingly, any such modification made by a person of ordinary skill in the art shall be considered as an infringement of the patent rights of this application and shall incur corresponding legal liability.

## Claims

1. A digital circuit for controlling the same register by different mobile industry processor interface (MIPI) buses, comprising at least a first MIPI module, a second MIPI module and a shared register module,
wherein an input of the first MIPI module is connected to a first MIPI bus, an input of the second MIPI module is connected to a second MIPI bus, and outputs of the first and second MIPI modules are connected to the shared register module via corresponding data bus, wherein serial clock signal lines in the first and second MIPI buses are connected to the shared register module, respectively,
wherein each of the first and second MIPI modules is an MIPI interface module, and wherein the shared register module is a user-defined register (UDR).

2. The digital circuit for controlling the same register by different MIPI buses of claim 1,
wherein the first or second MIPI module, when receiving an MIPI command, generates a corresponding flag bit signal lasting for a single clock cycle and outputs the flag bit signal to the shared register module, wherein the shared register module is based on the flag bit signal to generate a single pulse clock signal for causing a transition of register data at a rising edge of the single pulse clock signal.

3. The digital circuit for controlling the same register by different MIPI buses of claim 1,
wherein the shared register module generates, during a write operation performed by the first or second MIPI bus, an internal flag bit signal which records the bus that performs a last write operation, so that the shared register module responds only to a trigger or reset operation issued by the bus.

4. The digital circuit for controlling the same register by different MIPI buses of claim 1,
wherein the first MIPI module is constructed of a main logic circuit and a flag register bank, wherein:
an input of the main logic circuit is connected to the first MIPI bus, and an internal data line output by the main logic circuit is connected to an input of the flag register bank; and
a data buffer bus and a register address bus output by the main logic circuit, and write, trigger and reset flag data lines output by the flag register bank collectively constitute an output data line that is connected to the shared register module.

5. The digital circuit for controlling the same register by different MIPI buses of claim 1,
wherein the shared register module is constructed of a first logic gate, a second logic gate, a third logic gate, an OR logic gate and a register bank, wherein the first, second and third logic gates are combinational logic circuits and constitute a control logic circuit with the OR logic gate, wherein the register bank is constructed of a shared register and a register buffer, and wherein the shared register consists of a plurality of identically structured registers.

6. The digital circuit for controlling the same register by different MIPI buses of claim 5,
wherein each of the first and second logic gates is configured to provide the register bank with a clock signal, wherein inputs of the first logic gate are connected to a flag data bus and a register address bus in data lines output by the first MIPI module and to a serial clock signal line in the first MIPI bus, wherein inputs of the second logic gate are connected to a flag data bus and a register address bus in data lines output by the second MIPI module and to a serial clock signal line in the second MIPI bus, wherein outputs of the first and second logic gates are connected to the OR logic gate, and wherein an output of the OR logic gate is connected to a clock terminal of the register bank.

7. The digital circuit for controlling the same register by different MIPI buses of claim 5,
wherein the third logic gate is configured to provide the register bank with an input signal, wherein inputs of the third logic gate are connected to data buffer buses and flag data buses output by the first and second MIPI modules and to a current signal bus of the register buffer in the register bank, and wherein an output of the third logic gate is connected to an input of the register bank.

8. The digital circuit for controlling the same register by different MIPI buses of claim 5,
wherein an internal flag bit signal line of the shared register module is connected to inputs of the first, second and third logic gates.

9. The digital circuit for controlling the same register by different MIPI buses of claim 1,
wherein in a triggered mode, when one of the MIPI buses performs a write operation on the shared register module, written data first enters the register buffer, and wherein when the shared register module is triggered, the data in the register buffer is called and written into the shared register.

10. An electronic device, comprising the digital circuit for controlling the same register by different MIPI buses of any one of claims 1 to 9.
